# EUROPÄISCHE PATENTSCHRIFT

(11) **EP 2 685 607 B1**
(45) Veröffentlichungstag und Bekanntmachung des Hinweises auf die Patenterteilung: **01.04.2015**
(21) Anmeldenummer: 12175527.6
(22) Anmeldetag: 09.07.2012
(51) Int. Cl.: H02K 1/27

(54) **Fixierung von Permanentmagneten an einem Rotor**
Fixing of permanent magnets to a rotor
Fixation d'aimants permanents sur un rotor

(43) Veröffentlichungstag der Anmeldung: 15.01.2014
(73) Patentinhaber: Siemens Aktiengesellschaft, 80333 München (DE)
(72) Erfinder: Heim, Bruno, 97633 Grosseibstadt (DE)

(56) Entgegenhaltungen:
- EP-A1- 2 149 965
- CA-A1- 2 483 628
- GB-A- 2 117 188
- JP-A- 2000 232 743

## Beschreibung

Die Erfindung betrifft einen Rotor für eine elektrische Maschine mit mehreren Permanentmagneten, welche am Außenumfang des Rotors in axial angeordneten Permanentmagnet-Reihen angeordnet sind, einer an einer Stirnseite des Rotors angeordneten ersten Endscheibe und an der anderen Stirnseite des Rotors angeordneten zweiten Endscheibe, wobei die Permanentmagnet-Reihen anhand der beiden Endscheiben in axialer Richtung fixierbar sind und wobei eine Bandage derart um den Rotor gewickelt ist, dass die Permanentmagnete durch die Bandage am Außenumfang des Rotors fixierbar sind.

Eine derartige Vorrichtung kommt beispielsweise bei Servomotoren und besonders bei schnell drehenden Motoren zum Einsatz. Läufer mit außen liegenden Magneten werden in der Regel mit Bändern aus reißfesten Materialien bandagiert. Zur Aufnahme von Bandageanfang und Bandageende werden bei geblechten Läufern in der Regel Endscheiben eingesetzt. Der Bandageanfang und das Bandageende beginnen und enden bei den meisten Läufern wegen des geringen Luftspalts auf Endscheiben. Diese Endscheiben liegen an den Planflächen der Läuferendflächen an. Bedingt durch Längentoleranzen im Blechpaket und Längentoleranzen der Magnete bleiben Spalte zwischen den Magneten und zwischen Magnet und Endscheibe.

Bisher werden die Magnete zwischen den Endscheiben axial verteilt auf der Länge des Läufers aufgebracht. Axiale Spalte sind bisher prozesstechnisch nicht vermeidbar. Bei einseitiger Ausrichtung der Magnete wurden die Magnete einseitig an einer der Endscheiben angelegt und der zwischen den Magneten und der Isolierendscheibe entstandene Spalt wurde teilweise mit einem zusätzlichen Element (ähnlich einem O-Ring) ausgefüllt. Aufgrund der prozessbedingt nicht vermeidbaren umlaufenden Spaltbildung zieht sich die unter der Vorspannung aufgebrachte Bandage in Umfangsrichtung partiell zwischen die Magnete bzw. zwischen Magnet und Endscheibe. Durch das partiell in den Spalt eingezogene Bandageband wird die mögliche Zugspannung beim Bandagieren der Läufer begrenzt und Magnete teilweise aus ihrer idealen Lage verschoben.

Aus der DE 102 16 856 B4 ist ein permanentmagneterregter Läufer für eine elektrische Maschine bekannt, welche einen zylindrischen Läufer mit zumindest einer Endscheibe an einer der Stirnflächen des Rotors aufweist. Außerdem sind mehrere Permanentmagnete, die am Außenumfang des Läufers angeordnet sind, und eine Bandage vorgesehen, die um den Rotor derart gewickelt ist, dass sie die Permanentmagnete am Außenumfang des Rotors fixiert.

Der Erfindung liegt die Aufgabe zugrunde, Rotoren für elektrische Maschinen zu schaffen, welche bei besonders hohen Drehzahlen betrieben werden können.

Diese Aufgabe wird bei einem Rotor der eingangs genannten Art dadurch gelöst, dass mindestens zwei der Permanentmagnet-Reihen gegeneinander in axialer Richtung versetzt angeordnet sind und die erste Endscheibe und die zweite Endscheibe jeweils eine auf den jeweiligen axialen Enden der Permanentmagnet-Reihen aufliegende Oberfläche aufweisen. Diese Aufgabe wird weiter durch eine elektrische Maschine mit einem derartigen Rotor gelöst.

Zur Fixierung der Permanentmagnete auf dem Rotor werden diese zunächst vorfixiert, wobei mindestens zwei der Permanentmagnet-Reihen in axialer Richtung gegeneinander versetzt angeordnet werden. Die Vorfixierung dient lediglich der Kompensation der Gewichtskraft der Permanentmagnete. Anschließend werden die erste Endscheibe und die zweite Endscheibe an den beiden Stirnseiten des Rotors angebracht. Denkbar ist auch, zunächst die beiden Endscheiben am Rotor anzubringen und anschließend die Permanentmagnete auf dem Rotor zu fixieren. Die beiden Endscheiben weisen jeweils eine in axialer Richtung den Permanentmagnet-Reihen zugewandte Oberfläche auf, welche in Umfangsrichtung gestuft ausgeführt ist.

Dabei gibt es eine Zuordnung von einer in axialer Richtung höheren Stufe beispielsweise der ersten Endscheibe zu einer Permanentmagnet-Reihe, welche im Vergleich zu anderen Permanentmagnet-Reihen axial eingerückt ist. D.h. das axiale Ende jener eingerückten Permanentmagnet-Reihe ist im Vergleich zu anderen Permanentmagnet-Reihen weiter von jener Stirnfläche des Rotors entfernt, auf der die erste Endscheibe aufliegt.

Durch die gestufte Kontur an der jeweiligen Magnetanlagefläche der Endscheiben werden die Magnete leicht axial versetzt positioniert. Mit den Endscheiben können die Magnete axial zumindest nahezu spaltfrei angedrückt werden, wobei durch die in axialer Richtung versetzte Anordnung von mindestens zwei der Permanentmagnet-Reihen ein durchgehender Spalt in Umfangsrichtung verhindert werden kann. Durch die axial versetzte Anordnung von zumindest zwei der Permanentmagnet-Reihen entstehen in Umfangsrichtung, d. h. in Bandagezugrichtung, keine durchgehenden Spalte und die Magnete werden durch die Endscheibe zumindest nahezu spaltfrei auf Block gedrückt.

Aufgrund dieser Positionierung der Permanentmagnete können im Folgearbeitsgang höhere Bandagezüge realisiert werden. Dies kommt dadurch zustande, dass das Bandageband weniger leicht beschädigt werden kann, da Spalte in Umfangsrichtung zwischen Permanentmagneten kürzer sind und vor allem durchgehende Spalte, die sich um den gesamten Umfang des Rotors erstrecken, komplett vermieden werden. Somit ist es möglich, die Bandage entsprechend dem eingesetzten Bandageband mit der maximal zulässigen Vorspannkraft auf den Läufer aufzubringen, ohne dass partiell Teile der Bandage in Spalte gezogen werden und Magnete aus ihrer Ideallage verschoben werden.

Dank der erreichbaren höheren Bandagezüge wird die radiale Fixierung der Permanentmagnete verbessert, weil die Bandage größere nach radial außen gerichtete Fliehkräfte während des Betriebs des Rotors aufnehmen kann. Somit werden höhere Maximaldrehzahlen des Rotors und einer elektrischen Maschine mit solch einem Rotor ermöglicht.

Bei einer vorteilhaften Ausgestaltung der Erfindung sind jeweils in Umfangsrichtung nächst benachbarte Permanentmagnet-Reihen gegeneinander in axialer Richtung versetzt angeordnet. Durch die in axialer Richtung versetzte Anordnung von jeweils in Umfangsrichtung nächst benachbarten Permanentmagnet-Reihen werden Spalte in Umfangsrichtung und zwischen Permanentmagneten auf die kleinstmögliche Länge reduziert, weil ein solcher Spalt der Breite in Umfangsrichtung einer einzigen Permanentmagnet-Reihe, ggf. zuzüglich der Breite der axialen Spalte, entspricht. Diese Anordnung der Permanentmagnet-Reihen vermeidet deshalb besonders effektiv Spalte in Umfangsrichtung, welche die Bandagierung beschädigen könnten. Damit wird die radiale Fixierung der Permanentmagnete weiter verbessert, was besonders hohe Rotordrehzahlen ermöglicht.

Bei einer weiteren vorteilhaften Ausgestaltung der Erfindung sind jeweils in Umfangsrichtung übernächst benachbarte Permanentmagnet-Reihen gegeneinander in axialer Richtung versetzt angeordnet. Ein axialer Versatz zwischen jeweils in Umfangsrichtung übernächst benachbarten Permanentmagnet-Reihen ermöglicht im Vergleich zur vorherigen Ausführungsform eine Verlängerung des in Umfangsrichtung befindlichen Spaltes zwischen Permanentmagneten, wobei ein derartiger Spalt bei bestimmten Anwendungen schon ausreicht. Insbesondere jedoch in Kombination mit einem Versatz zwischen jeweils in Umfangsrichtung nächst benachbarten Permanentmagnet-Reihen wird eine besonders vorteilhafte Wirkung erzielt, da ein Bandageband während eines vollen Umlaufs um den Rotor besonders kurze Spalte in Umfangsrichtung abdeckt und gleichzeitig nur jeder dritte Spalt in Umfangsrichtung an der gleichen axialen Position auftritt.

Denkbar sind insbesondere auch andere Anordnungen der Permanentmagnet-Reihen. Beispielsweise können auch in Umfangsrichtung noch weiter entfernte Permanentmagnet-Reihen gegeneinander versetzt angeordnet sein.

Bei einer weiteren vorteilhaften Ausgestaltung der Erfindung weist zumindest die erste Endscheibe nach radial außen weisende Zungenfedern auf, deren jeweilige Enden auf den jeweiligen axialen Enden der Permanentmagnet-Reihen aufliegen.

Die Zungenfedern üben auf die jeweilige Permanentmagnet-Reihe eine Federkraft aus, da die Zungenfedern elastisch sind. Die jeweilige Federkraft der jeweiligen Zungenfeder wird dabei so ausgelegt, dass die Magnete axial nahezu spaltfrei zusammengedrückt werden. Die Aufspaltung der Kontur der Endscheibe ermöglicht das Aufbringen einer individuellen, axialen Federkraft auf die Permanentmagnet-Reihen. Die Zungenfedern der Endscheibe definieren das jeweilige axiale Ende der Permanentmagnet-Reihen sowie den axialen Versatz zwischen Permanentmagnet-Reihen.

Bei einer vorteilhaften Ausgestaltung der Erfindung ist zumindest eine der beiden Endscheiben als Stanzblech ausgeführt. Eine derartige Endscheibe ist besonders einfach und kostengünstig zu fertigen und ist gleichzeitig stabil genug, um die Permanentmagnet-Reihen zuverlässig in axialer Richtung zu positionieren.

Bei einer vorteilhaften Ausgestaltung der Erfindung ist der Durchmesser des Rotors samt den darauf angeordneten Permanentmagneten mindestens so groß wie der Durchmesser der Endscheiben. Insbesondere durch Endscheiben mit einem etwas kleineren Durchmesser im Vergleich zum Rotor mit darauf angebrachten Permanentmagneten wird die Bandagierung des Rotors vereinfacht. Denn oftmals weisen elektrische Maschinen einen sehr kleinen Luftspalt zwischen dem Rotor und dem Stator auf, wobei der Anfang und das Ende der Bandagierung des Rotors in radialer Richtung etwas mehr Bauraum benötigt als die restliche Bandagierung. Weil die Endscheiben im Vergleich zum restlichen Rotor eine etwas kleinere radiale Ausdehnung aufweisen, können somit der Anfang und das Ende der Bandagierung im axialen Bereich der beiden Endscheiben erfolgen, ohne dass der Luftspalt der elektrischen Maschine größer ausgelegt werden muss.

Im Folgenden wird die Erfindung anhand der in den Figuren dargestellten Ausführungsbeispiele näher beschrieben und erläutert. Es zeigen:
- FIG 1: eine perspektivische Darstellung einer Ausführungsform des erfindungsgemäßen Rotors und
- FIG 2: eine perspektivische Darstellung einer weiteren Ausführungsform des erfindungsgemäßen Rotors.

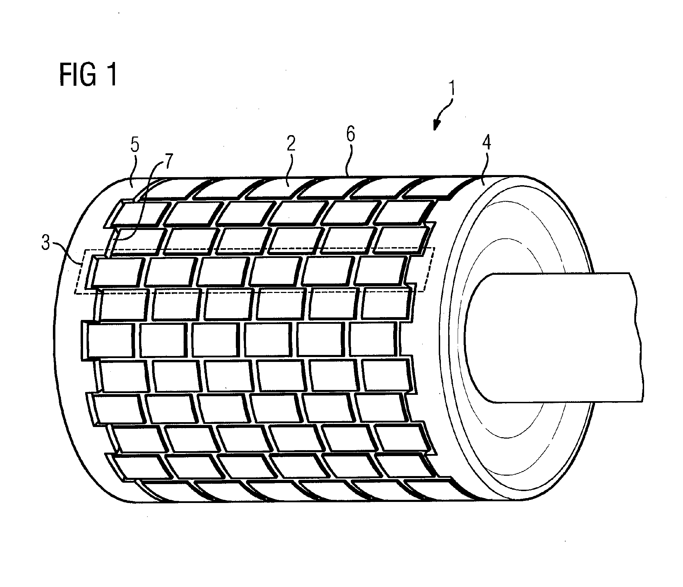

Figur 1 zeigt eine perspektivische Darstellung einer Ausführungsform des erfindungsgemäßen Rotors 1. Der Rotor 1 ist zylinderförmig ausgeführt und weist an einer Stirnseite eine erste Endscheibe 4 und an der zweiten Stirnseite eine zweite Endscheibe 5 auf. Weiterhin weist der Rotor 1 einen Außenumfang 6 auf, auf welchem Permanentmagnete 2 in axial angeordneten Permanentmagnet-Reihen 3 angeordnet sind. Nicht dargestellt ist eine Bandage, welche um den Rotor 1 gewickelt wird und welche die Permanentmagnete 2 am Außenumfang 6 des Rotors 1 in radialer Richtung fixiert.

Die Permanentmagnet-Reihen 3 sind derart angeordnet, dass jeweils in Umfangsrichtung benachbarte Permanentmagnet-Reihen 3 axial gegeneinander versetzt sind. Somit weisen benachbarte Permanentmagnet-Reihen 3 auch an ihrem jeweiligen axialen Ende einen Versatz auf. Die erste Endscheibe 4 und die zweite Endscheibe 5 sind derart ausgeführt, dass sie jeweils über eine zu den Permanentmagnet-Reihen 3 weisende und auf dem Ende der Permanentmagnet-Reihen 3 aufliegende Oberfläche 7 verfügen. Die jeweilige auf den jeweiligen axialen Enden der Permanentmagnet-Reihen 3 aufliegende Oberfläche 7 fixiert die vorfixierten Permanentmagnete 2 in axialer Richtung und ermöglicht eine axial nahezu spaltfreie Positionierung der Permanentmagnete 2. Durch den axialen Versatz der Permanentmagnet-Reihen 3 wird ein durchgehender Spalt in Umfangsrichtung verhindert, so dass beim Bandagieren des Rotors 1 Beschädigungen des Bandagebandes vermieden werden. Dies ermöglicht letzten Endes höhere Bandagezüge und somit eine bessere radiale Fixierung der Permanentmagnete 2, was höhere Rotordrehzahlen erlaubt.

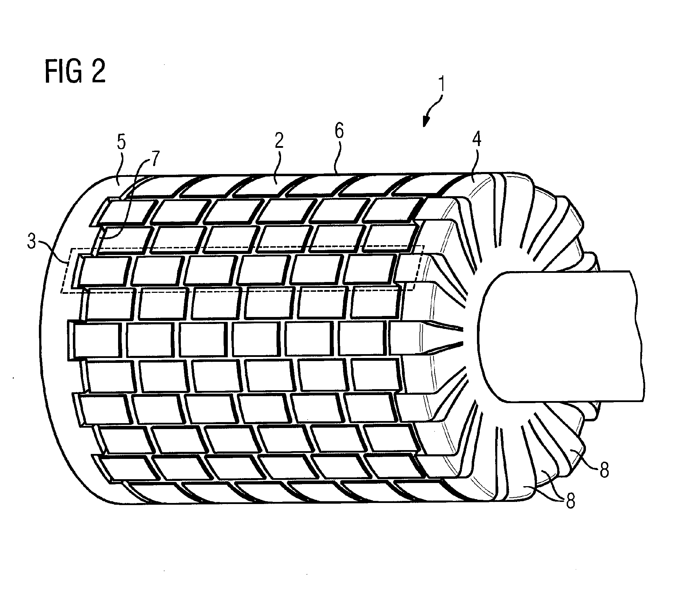

Figur 2 zeigt eine perspektivische Darstellung einer weiteren Ausführungsform des erfindungsgemäßen Rotors 1. Die erste Endscheibe 4 ist an einer der Stirnseiten des Rotors 1 angeordnet und weist nach radial außen weisende Zungenfedern 8 auf. Mehrere Permanentmagnete 2 bilden in axialer Richtung Permanentmagnet-Reihen 3, wobei das jeweilige Ende der Zungenfedern 8 auf den jeweiligen axialen Enden von Permanentmagnet-Reihen 3 aufliegt.

Zusammenfassend betrifft die Erfindung einen Rotor für eine elektrische Maschine mit mehreren Permanentmagneten, welche am Außenumfang des Rotors in axial angeordneten Permanentmagnet-Reihen angeordnet sind, einer an einer Stirnseite des Rotors angeordneten ersten Endscheibe und an der anderen Stirnseite des Rotors angeordneten zweiten Endscheibe, wobei die Permanentmagnet-Reihen anhand der beiden Endscheiben in axialer Richtung fixierbar sind und wobei eine Bandage derart um den Rotor gewickelt ist, dass die Permanentmagnete durch die Bandage am Außenumfang des Rotors fixierbar sind. Um Rotoren für elektrische Maschinen zu schaffen, welche bei besonders hohen Drehzahlen betrieben werden können, wird vorgeschlagen, dass mindestens zwei der Permanentmagnet-Reihen gegeneinander in axialer Richtung versetzt angeordnet sind und die erste Endscheibe und die zweite Endscheibe jeweils eine auf den jeweiligen axialen Enden der Permanentmagnet-Reihen aufliegende Oberfläche aufweisen.

## Patentansprüche

1. Rotor (1) für eine elektrische Maschine mit
- mehreren Permanentmagneten (2), welche am Außenumfang (6) des Rotors (1) in axial angeordneten Permanentmagnet-Reihen (3) angeordnet sind,
- einer an einer Stirnseite des Rotors (1) angeordneten ersten Endscheibe (4) und an der anderen Stirnseite des Rotors (1) angeordneten zweiten Endscheibe (5),
- wobei die Permanentmagnet-Reihen (3) anhand der beiden Endscheiben (4, 5) in axialer Richtung fixierbar sind und
- wobei eine Bandage derart um den Rotor (1) gewickelt ist, dass die Permanentmagnete (2) durch die Bandage am Außenumfang (6) des Rotors (1) fixierbar sind,
**dadurch gekennzeichnet, dass**
- mindestens zwei der Permanentmagnet-Reihen (3) gegeneinander in axialer Richtung versetzt angeordnet sind und
- die erste Endscheibe (4) und die zweite Endscheibe (5) jeweils eine auf den jeweiligen axialen Enden der Permanentmagnet-Reihen (3) aufliegende Oberfläche (7) aufweisen.

2. Rotor (1) nach Anspruch 1,
wobei jeweils in Umfangsrichtung nächst benachbarte Permanentmagnet-Reihen (3) gegeneinander in axialer Richtung versetzt angeordnet sind.

3. Rotor (1) nach einem der vorhergehenden Ansprüche,
wobei jeweils in Umfangsrichtung übernächst benachbarte Permanentmagnet-Reihen (3) gegeneinander in axialer Richtung versetzt angeordnet sind.

4. Rotor (1) nach einem der vorhergehenden Ansprüche,
wobei zumindest die erste Endscheibe (4) nach radial außen weisende Zungenfedern (8) aufweist, deren jeweilige Enden auf den jeweiligen axialen Enden der Permanentmagnet-Reihen (3) aufliegen.

5. Rotor (1) nach einem der vorhergehenden Ansprüche, wobei zumindest eine der beiden Endscheiben (4, 5) als Stanzblech ausgeführt ist.

6. Rotor (1) nach einem der vorhergehenden Ansprüche, wobei der Durchmesser des Rotors (1) samt den darauf angeordneten Permanentmagneten (2) mindestens so groß wie der Durchmesser der Endscheiben (4, 5) ist.

7. Elektrische Maschine mit einem Rotor (1) nach einem der vorhergehenden Ansprüche.

## Claims

1. Rotor (1) for an electrical machine, comprising
- a plurality of permanent magnets (2) which are arranged on the outer surface (6) of the rotor (1) in axially disposed permanent magnet rows (3),
- a first locking plate (4), which is arranged at one end face of the rotor (1), and a second locking plate (5), which is arranged at the other end face of the rotor (1),
- wherein the permanent magnet rows (3) can be fixed in an axial direction by means of the two locking plates (4, 5), and
- wherein a bandage is wound around the rotor (1) such that the permanent magnets (2) can be fixed to the outer surface (6) of the rotor (1) by means of the bandage,
**characterised in that**
- at least two of the permanent magnet rows (3) are so arranged as to be mutually offset in an axial direction, and
- the first locking plate (4) and the second locking plate (5) each feature a surface (7) which rests on the respective axial ends of the permanent magnet rows (3).

2. Rotor (1) according to claim 1,
wherein permanent magnet rows (3) which are in each case immediately adjacent in a circumferential direction are so arranged as to be mutually offset in an axial direction.

3. Rotor (1) according to one of the preceding claims,
wherein every second permanent magnet row (3) in a circumferential direction is so arranged as to be mutually offset in an axial direction.

4. Rotor (1) according to one of the preceding claims,
wherein at least the first locking plate (4) has finger springs (8) which extend radially outward and whose respective ends rest on the respective axial ends of the permanent magnet rows (3).

5. Rotor (1) according to one of the preceding claims,
wherein at least one of the two locking plates (4, 5) is embodied as a punched sheet.

6. Rotor (1) according to one of the preceding claims,
wherein the diameter of the rotor (1) including the permanent magnets (2) arranged thereon is at least as great as the diameter of the locking plates (4, 5).

7. Electrical machine comprising a rotor (1) according to one of the preceding claims.

## Revendications

1. Rotor ( 1 ) pour une machine électrique comprenant
- plusieurs aimants ( 2 ) permanents, qui sont disposés sur le pourtour ( 6 ) extérieur du rotor ( 1 ) en rangées ( 3 ) d'aimants permanents disposées axialement,
- un premier flasque ( 4 ) d'extrémité, disposé sur un côté frontal du rotor ( 1 ) et un second flasque ( 5 ) d'extrémité, disposé sur l'autre côté frontal du rotor ( 1 ),
- dans lequel les rangées ( 3 ) d'aimants permanents peuvent être immobilisées dans la direction axiale à l'aide des deux flasques ( 4, 5 ) et
- dans lequel une ceinture est enroulée autour du rotor ( 1 ), de manière à pouvoir immobiliser, sur le pourtour ( 6 ) extérieur du rotor ( 1 ), les aimants ( 2 ) permanents par la ceinture,
**caractérisé en ce que**
- au moins deux des rangées ( 3 ) d'aimants permanents sont décalées l'une par rapport à l'autre dans la direction axiale et
- le premier flasque ( 4 ) et le second flasque ( 5 ) ont respectivement une surface ( 7 ) s'appliquant aux extrémités axiales respectives des rangées ( 3 ) d'aimants permanents.

2. Rotor ( 1 ) suivant la revendication 1,
dans lequel des rangées ( 3 ) d'aimants permanents immédiatement voisines dans la direction périphérique, sont décalées l'une par rapport à l'autre dans la direction axiale.

3. Rotor ( 1 ) suivant l'une des revendications précédentes, dans lequel des rangées ( 3 ) d'aimants permanents, faisant suite aux voisines dans la direction périphérique, sont décalées l'une par rapport à l'autre dans la direction axiale.

4. Rotor ( 1 ) suivant l'une des revendications précédentes, dans lequel au moins le premier flasque ( 4 ) a des ressorts ( 8 ) à lame, qui sont tournés radialement vers l'extérieur et dont les extrémités respectives s'appliquent aux extrémités axiales respectives des rangées ( 3 ) d'aimants permanents.

5. Rotor ( 1 ) suivant l'une des revendications précédentes, dans lequel au moins l'un des deux flasques ( 4, 5 ) est réalisé sous la forme d'une tôle découpée.

6. Rotor ( 1 ) suivant l'une des revendications précédentes, dans lequel le diamètre du rotor ( 1 ), ensemble avec les aimants ( 2 ) permanents qui y sont montés, est au moins aussi grand que le diamètre des flasques ( 4, 5 ).

7. Machine électrique ayant un rotor ( 1 ) suivant l'une des revendications précédentes.
